# EUROPEAN PATENT APPLICATION

(11) **EP 4 692 259 A1**
(43) Date of publication of application: **11.02.2026**
(21) Application number: 24779392.0
(22) Date of filing: 12.03.2024
(51) Int. Cl.: C09D 171/02, B32B 13/12, B32B 27/00, C04B 41/64, C08K 5/544, C08L 71/02, C09D 5/00, C09D 7/63

(54) **PRIMER COMPOSITION AND LAMINATE**

(30) Priority: 27.03.2023 JP 2023050460
(71) Applicant: Kaneka Corporation, Osaka-shi, Osaka 530-8288 (JP)
(72) Inventor: LEEMANS, Tom, 2260 Westerlo-Oevel (BE); HARUMASHI, Tatsuro, 2260 Westerlo-Oevel (BE)
(74) Representative: Vossius & Partner Patentanwälte Rechtsanwälte mbB
(86) International application number: PCT/JP2024/009469
(87) International publication number: WO 2024/203262

(57) **Abstract**

An object is to provide a primer composition that contains a polyoxyalkylene-based polymer having a hydrolyzable silyl group and that allows a curable composition containing the polyoxyalkylene-based polymer to have favorable adhesiveness with respect to concrete, mortar, and the like. The object is attained by a primer composition which contains a polyoxyalkylene-based polymer (A) having a specific structure, a polyoxyalkylene-based polymer (B) having a specific structure and a number average molecular weight falling within a specific range, and an amine compound (C) having two hydrolyzable silyl groups and in which contained amounts of (A) through (C) satisfy specific ranges.

## Description

### Technical Field

The present invention relates to a primer composition that contains a polyoxyalkylene-based polymer having a hydrolyzable silyl group and an amine compound having two hydrolyzable silyl groups, and a laminated body containing the primer composition.

### Background Art

An organic polymer having a hydrolyzable silyl group has properties of being crosslinked via a siloxane bond formed by a hydrolysis reaction of a hydrolyzable silyl group by moisture and the like at room temperature, and thus forming a cured product.

Among these hydrolyzable silyl group-containing polymers, a polymer whose main chain skeleton is a polyoxyalkylene-based skeleton has already been industrially produced, and is widely used in applications such as sealing materials and adhesive agents. These sealing materials and adhesive agents generally adhere to a variety of base materials. However, there has been a problem that those sealing materials and adhesive agents are difficult to adhere to concrete, mortar, and the like which water permeates.

Therefore, in a case where the sealing material, adhesive agent, and the like are used with respect to undercoat materials to which the sealing material, adhesive agent, and the like are difficult to adhere, a primer is generally used to enhance adhesiveness. As the primer, the following primers have been used: silane-based primers such as a silane coupling agent, acrylic primers such as a silyl group-containing acrylic polymer, urethane-based primers such as polyisocyanate and an isocyanate group-containing urethane prepolymer, and the like (e.g., Patent Literature 1).

A primer that contains a polyoxyalkylene-based polymer having a hydrolyzable silyl group and that is used in sealing materials each containing a polymer having a hydrolyzable silyl group, adhesive agents, and the like has also been developed (e.g., Patent Literatures 2 and 3).

### Citation List

### [Patent Literature]

[Patent Literature 1]
   Japanese Patent Application Publication Tokukai No. 2012-077143
[Patent Literature 2]
   Japanese Patent Application Publication Tokukaihei No. 07-011222
[Patent Literature 3]
   Japanese Patent Application Publication Tokukaihei No. 07-011223

### Summary of Invention

### Technical Problem

A curable composition containing a polyoxyalkylene-based polymer having a hydrolyzable silyl group sometimes has difficulty in adhesion to concrete, mortar, and the like. Therefore, the curable composition has often been applied after a primer is applied to concrete or mortar. However, even in a case where a primer is used, there is room for improvement in adhesiveness, particularly water-resistant adhesiveness to concrete, mortar, and the like.

### Solution to Problem

The inventors of the present invention have carried out diligent study in order to attain the object, and consequently completed the invention below.

That is, the present invention relates to a primer composition, containing:
a polyoxyalkylene-based polymer (A) having a hydrolyzable silyl group represented by general formula (1) below,

   -SiR¹₃-ₐXₐ (1)
where each R¹ independently represents a hydrocarbon group which has 1 to 10 carbon atoms and which may have a substituent constituted by a hetero atom-containing group or a halogen atom, each X independently represents a hydroxy group or a hydrolyzable group, and "a" represents 1 or 2;
a polyoxyalkylene-based polymer (B) that has a hydrolyzable silyl group represented by general formula (2) below, that has three or more terminal structures, and that has a number average molecular weight of 1,000 to 10,000,

   -SiY₃ (2)
where each Y independently represents a hydroxy group or a hydrolyzable group; and
an amine compound (C) that has two hydrolyzable silyl groups,
an amount of the amine compound (C) being 12 parts by weight to 50 parts by weight, with respect to a combined total of 100 parts by weight of the polyoxyalkylene-based polymer (A) and the polyoxyalkylene-based polymer (B).

### Advantageous Effects of Invention

An object of the present invention is to provide a primer composition that contains a polyoxyalkylene-based polymer having a hydrolyzable silyl group and that allows a curable composition containing the polyoxyalkylene-based polymer having a hydrolyzable silyl group to have favorable adhesiveness, particularly water-resistant adhesiveness, with respect to concrete, mortar, and the like.

### Description of Embodiments

The following description will discuss details of the present invention.

A primer composition in accordance with the present invention, contains:
a polyoxyalkylene-based polymer (A) (hereinafter sometimes simply referred to as a "polymer (A)") having a hydrolyzable silyl group represented by general formula (1) below,

   -SiR¹₃-ₐXₐ (1)
where each R¹ independently represents a hydrocarbon group which has 1 to 10 carbon atoms and which may have a substituent constituted by a hetero atom-containing group or a halogen atom, each X independently represents a hydroxy group or a hydrolyzable group, and "a" represents 1 or 2;
a polyoxyalkylene-based polymer (B) (hereinafter sometimes simply referred to as a "polymer (B)") that has a hydrolyzable silyl group represented by general formula (2) below, that has three or more terminal structures, and that has a number average molecular weight of not less than 1,000 and not more than 10,000,

   -SiY₃ (2)
where each Y independently represents a hydroxy group or a hydrolyzable group; and
an amine compound (C) that has two hydrolyzable silyl groups,
an amount of the amine compound (C) being 12 parts by weight to 50 parts by weight, with respect to a combined total of 100 parts by weight of the polyoxyalkylene-based polymer (A) and the polyoxyalkylene-based polymer (B).

### <<Polyoxyalkylene-based polymer (A)>>

A primer composition in accordance with an embodiment of the present invention contains a polyoxyalkylene-based polymer (A) having a hydrolyzable silyl group represented by general formula (1) below.

-SiR¹₃-ₐXₐ (1)

where each R¹ independently represents a hydrocarbon group which has 1 to 10 carbon atoms and which may have a substituent constituted by a hetero atom-containing group or a halogen atom, each X independently represents a hydroxy group or a hydrolyzable group, and "a" represents 1 or 2.

By using a primer composition containing the polyoxyalkylene-based polymer (A) and a polyoxyalkylene-based polymer (B) described later, it is possible to improve adhesiveness and water-resistant adhesiveness between (i) a curable composition containing a polyoxyalkylene-based polymer having a hydrolyzable silyl group and (ii) concrete, mortar, and the like.

### <Hydrolyzable silyl group>

The polyoxyalkylene-based polymer (A) has a hydrolyzable silyl group represented by general formula (1) below.

-SiR¹₃-ₐXₐ (1)

where each R¹ independently represents a hydrocarbon group which has 1 to 10 carbon atoms and which may have a substituent constituted by a hetero atom-containing group or a halogen atom, each X independently represents a hydroxy group or a hydrolyzable group, and "a" represents 1 or 2.

Each R¹ independently represents a hydrocarbon group which has 1 to 10 carbon atoms and which may have a substituent constituted by a hetero atom-containing group or a halogen atom. The number of carbon atoms is preferably 1 to 6, more preferably 1 to 4, particularly preferably 1 to 2. The hydrocarbon group may be an unsubstituted hydrocarbon group or may be a hydrocarbon group having a substituent constituted by a hetero atom-containing group or a halogen atom.

Examples of a hetero atom of the hetero atom-containing group contained in R¹ include N, O, S, P, and Si. Suitable examples of the hetero atom-containing group include: a mercapto group; a nitro group; a cyano group; alkoxy groups such as a methoxy group and an ethoxy group; alkylthio groups such as a methylthio group and an ethylthio group; acyl groups such as an acetyl group; acyloxy groups such as an acetyloxy group; substituted or unsubstituted amino groups such as an amino group, a methylamino group, an ethylamino group, a dimethylamino group, and a diethylamino group; and the like.

Examples of the halogen atom included in R¹ include Cl, Br, I, and F.

Specific examples of R¹ include: alkyl groups such as a methyl group, an ethyl group, an n-propyl group, an isopropyl group, an n-butyl group, an isobutyl group, a sec-butyl group, and a tert-butyl group; alkenyl groups such as a vinyl group and a 2-propenyl group; cycloalkyl groups such as a cyclopropyl group, a cyclohexyl group, and a cyclooctyl group; aryl groups such as a phenyl group, a naphthalen-1-yl group, and a naphthalen-2-yl group; aralkyl groups such as a benzyl group; halogenated methyl groups such as a chloromethyl group and a bromomethyl group; alkoxymethyl groups such as a methoxymethyl group; aminomethyl groups such as a diethylaminomethyl group; and the like.

Suitable examples of R¹ include alkyl groups such as a methyl group and an ethyl group; halogenated methyl groups such as a chloromethyl group; alkoxymethyl groups such as a methoxymethyl group; cycloalkyl groups such as a cyclohexyl group; aryl groups such as a phenyl group; aralkyl groups such as a benzyl group; and the like. R¹ is preferably a methyl group, a methoxymethyl group, or a chloromethyl group, more preferably a methyl group or a methoxymethyl group, further preferably a methyl group.

Examples of X include a hydroxy group; halogen; alkoxy groups such as a methoxy group, an ethoxy group, a propoxy group, an isopropoxy group, a butoxy group, and a tert-butoxy group; acyloxy groups such as an acetoxy group; a ketoximate group; an amino group; an amide group; an acid amide group; an aminooxy group; a mercapto group; an alkenyloxy group; and the like. Among these groups, the alkoxy groups such as a methoxy group and an ethoxy group are more preferable, the methoxy group and the ethoxy group are further preferable, and the methoxy group is particularly preferable, because these groups have gentle hydrolyzability and are easy to handle.

### "a" is 1 or 2. "a" is preferably 2.

Specific examples of the hydrolyzable silyl group include, but are not limited to, a dimethoxymethylsilyl group, a diethoxymethylsilyl group, a dimethoxyethylsilyl group, a (chloromethyl)dimethoxysilyl group, a (chloromethyl)diethoxysilyl group, a (methoxymethyl)dimethoxysilyl group, a (methoxymethyl)diethoxysilyl group, an (N,N-diethylaminomethyl)dimethoxysilyl group, and an (N,N-diethylaminomethyl)diethoxysilyl group. Among these groups, the dimethoxymethylsilyl group and the diethoxymethylsilyl group are preferable because these groups have gentle hydrolyzability and are easy to handle.

The number of hydrolyzable silyl groups which are contained in one molecule of the polyoxyalkylene-based polymer (A) is, on average, preferably not less than 0.5, more preferably not less than 1.0, further preferably not less than 1.2. An upper limit of the number of hydrolyzable silyl groups is, on average, preferably not more than 4.0, more preferably not more than 3.0. A range of the number of hydrolyzable silyl groups contained in one molecule is preferably 0.5 to 4.0, more preferably 1.0 to 3.0, further preferably 1.2 to 3.0.

### <Main chain structure>

A main chain structure of the polyoxyalkylene-based polymer (A) may be a straight chain or may be a branched chain. The main chain structure is preferably a straight chain because flexibility of a cured primer composition is improved.

The main chain of the polyoxyalkylene-based polymer (A) is a polymer having a repeating unit that is represented by - R²-O- (where R² is a linear or branched alkylene group having 1 to 14 carbon atoms). Here, R² is more preferably a linear or branched alkylene group having 2 to 4 carbon atoms. Specific examples of the repeating unit represented by -R²-O- include -CH₂O-, -CH₂CH₂O-, -CH₂CH(CH₃)O-, -CH₂C(CH₃)(CH₃)O-, - CH₂CH₂CH₂CH₂O-, and the like. Among these, -CH₂CH₂O- and -CH₂CH(CH₃)O- are preferable, -CH₂CH(CH₃)O- is more preferable.

The main chain structure of the polyoxyalkylene-based polymer (A) may contain a urethane bond, a urea bond, an ester bond, or the like, but preferably does not contain such a bond.

The number average molecular weight (as a polystyrene equivalent molecular weight by GPC) of the polyoxyalkylene-based polymer (A) is preferably 5,000 to 50,000, more preferably 7,000 to 40,000, particularly preferably 10,000 to 30,000, most preferably 12,000 to 20,000. In a case where the number average molecular weight falls within the above range, it is possible to obtain a primer composition which has low viscosity and is easily applied.

The molecular weight of the polyoxyalkylene-based polymer (A) can be expressed by a terminal group equivalent molecular weight. The terminal group equivalent molecular weight is found as follows. That is, a polymer precursor into which no hydrolyzable silyl group has been introduced is subjected to a titrimetric analysis based on the respective principles of (i) a hydroxy value measurement method defined in JIS K 1557 and (ii) an iodine value measurement method defined in JIS K 0070 so as to directly measure a terminal group concentration. Then, in consideration of a structure (branching degree determined in accordance with a polymerization initiator used) of the polymer, the terminal group equivalent molecular weight is found. The number average molecular weight, obtained by GPC, of the polyoxyalkylene-based polymer (A) can also be obtained as follows. That is, calibration curves of the number average molecular weight obtained by GPC measurement and the terminal group equivalent molecular weight are prepared. Then, the terminal group equivalent molecular weight of the polymer precursor is converted into the number average molecular weight (obtained by GPC) of the hydrolyzable silyl group-containing polymer.

A molecular weight distribution (Mw/Mn) of the polyoxyalkylene-based polymer (A) is not particularly limited, and is preferably narrow. Specifically, the molecular weight distribution is preferably not more than 1.6, more preferably not more than 1.4, further preferably not more than 1.3, particularly preferably not more than 1.2.

The molecular weight distribution of the polyoxyalkylene-based polymer (A) can be obtained from the number average molecular weight and the weight average molecular weight which are obtained by GPC measurement.

### <Method for producing polyoxyalkylene-based polymer (A)>

A method for producing the polyoxyalkylene-based polymer (A) is, preferably: (i) a method in which a hydroxy group-terminated polyoxyalkylene-based polymer is obtained by a method in which a double metal cyanide complex catalyst is used to polymerize an epoxy compound with a hydroxy group-containing initiator, then a hydroxy group of the hydroxy group-terminated polyoxyalkylene-based polymer thus obtained is converted into a carbon-carbon unsaturated group, and then a silane compound is added to the obtained polymer by a hydrosilylation reaction; (ii) a method in which a hydroxy group-terminated polyoxyalkylene-based polymer is obtained by a method in which a double metal cyanide complex catalyst is used to polymerize an epoxy compound with a hydroxy group-containing initiator, and then the hydroxy group-terminated polyoxyalkylene-based polymer thus obtained is caused to react with a compound having both a hydrolyzable silyl group and a group that is reactive with a hydroxy group; and (iii) a method in which an isocyanate group-terminated polymer is obtained through a reaction between a hydroxy group-terminated polyoxyalkylene-based polymer and an excessive polyisocyanate compound, and then a compound having both a hydrolyzable silyl group and a group that is reactive with an isocyanate group is caused to react with the isocyanate group-terminated polymer.

Examples of the hydroxy group-containing initiator used in each of the methods (i) and (ii) include initiators each having one or more hydroxy groups, such as ethylene glycol, propylene glycol, glycerin, pentaerythritol, polypropylene glycol having a low molecular weight, polyoxypropylene triol having a low molecular weight, allyl alcohol, methanol, ethanol, propanol, butanol, pentanol, hexanol, a polypropylene monoallyl ether, and a polypropylene monoalkyl ether.

In a case of obtaining a polymer having a straight main chain structure, it is preferable to use an initiator having one or two hydroxy groups, and preferable to use an initiator having two hydroxy groups.

Examples of the epoxy compound used in each of the methods (i) and (ii) include: alkylene oxides such as ethylene oxide and propylene oxide; and glycidyl ethers such as methyl glycidyl ether and allyl glycidyl ether. Among these compounds, the propylene oxide is preferable.

Examples of the carbon-carbon unsaturated group used in the method (i) include a vinyl group, an allyl group, a methallyl group, and a propargyl group. Among these groups, the allyl group is preferable.

A method for converting the hydroxy group into the carbon-carbon unsaturated group in (i) is preferably a method in which an alkali metal salt is caused to act on the hydroxy group-terminated polymer, and then the polymer is caused to react with a halogenated hydrocarbon compound having a carbon-carbon unsaturated bond.

Examples of the halogenated hydrocarbon compound used in the method (i) include vinyl chloride, allyl chloride, methallyl chloride, propargyl chloride, vinyl bromide, allyl bromide, methallyl bromide, propargyl bromide, vinyl iodide, allyl iodide, methallyl iodide, and propargyl iodide.

The hydrosilane compound used in the method (i) can be dimethoxymethylsilane, diethoxymethylsilane, dimethoxyethylsilane, (chloromethyl)dimethoxysilane, (chloromethyl)diethoxysilane, (methoxymethyl)dimethoxysilane, (methoxymethyl)diethoxysilane, (N,N-diethylaminomethyl)dimethoxysilane, (N,N-diethylaminomethyl)diethoxysilane, or the like.

The hydrosilylation reaction used in the method (i) is accelerated by various catalysts. A hydrosilylation catalyst may be a known catalyst. For example, the hydrosilylation catalyst can be any of the following: chloroplatinic acid; a chloroplatinic acid complex composed of chloroplatinic acid and alcohol, aldehyde, ketone, or the like; a platinum-olefin complex [for example, Pt(CH₂=CH₂)₂(PPh₃), Pt(CH₂=CH₂)₂Cl₂]; a platinum-vinylsiloxane complex [Pt{(vinyl)Me₂SiOSiMe₂(vinyl)}, Pt{Me(vinyl)SiO}₄]; and the like.

The compound which has both a hydrolyzable silyl group and a group that is reactive with a hydroxy group and which can be used in the method (ii) can be, for example, any of the following: isocyanate silanes such as 3-isocyanate propyldimethoxymethylsilane, and isocyanate methyldimethoxymethylsilane; mercaptosilanes such as 3-mercaptopropyldimethoxymethylsilane; and epoxysilanes such as 3-glycidoxypropyldimethoxymethylsilane.

Examples of the polyisocyanate compound which can be used in the method (iii) include: aromatic polyisocyanates such as toluene (tolylene) diisocyanate, diphenylmethane diisocyanate, and xylylene diisocyanate; and aliphatic polyisocyanates such as isophorone diisocyanate and hexamethylene diisocyanate.

Examples of the compound which has both a hydrolyzable silyl group and a group that is reactive with an isocyanate group and which can be used in the method (iii) include: amino group-containing silanes such as γ-aminopropyldimethoxymethylsilane, N-(β-aminoethyl)-γ-aminopropyldimethoxymethylsilane, γ-(N-phenyl)aminopropyldimethoxymethylsilane, N-ethylaminoisobutyldimethoxymethylsilane, and N-cyclohexylaminomethyldimethoxymethylsilane; hydroxy group-containing silanes such as γ-hydroxypropyldimethoxymethylsilane; mercapto group-containing silanes such as γ-mercaptopropyldimethoxymethylsilane; and the like.

As the polyoxyalkylene-based polymer (A), a polyoxyalkylene-based polymer having a plurality of hydrolyzable silyl groups at one terminal can also be used. In a method for producing a polyoxyalkylene-based polymer having a plurality of hydrolyzable silyl groups at one terminal, first, an epoxy compound is polymerized with respect to a hydroxy group-containing initiator in the presence of a double metal cyanide complex catalyst to obtain a hydroxy group-terminated polyoxyalkylene-based polymer. An alkali metal salt is caused to act on the hydroxy group of the obtained polyoxyalkylene-based polymer, and then allyl glycidyl ether is further caused to react with the hydroxy group. Subsequently, an alkali metal salt is caused to act again on the generated hydroxy group terminals, and then a halogenated hydrocarbon compound having a carbon-carbon unsaturated bond is further caused to react with the hydroxy group terminals. Thus, a polyoxyalkylene-based polymer having a plurality of carbon-carbon unsaturated groups at one terminal is obtained. A silane compound is added, through a hydrosilylation reaction, to the obtained polyoxyalkylene-based polymer having carbon-carbon unsaturated groups. With this method, it is possible to obtain a polyoxyalkylene-based polymer having a plurality of hydrolyzable silyl groups at one terminal.

### <<Polyoxyalkylene-based polymer (B)>>

The primer composition in accordance with an embodiment of the present invention contains a polyoxyalkylene-based polymer (B) that has a hydrolyzable silyl group represented by general formula (2) below, that has three or more terminal structures, and that has a number average molecular weight of not less than 1,000 and not more than 10,000.

-SiY₃ (2)

where each Y independently represents a hydroxy group or a hydrolyzable group.

By using a primer composition containing the polyoxyalkylene-based polymer (B) and the foregoing polyoxyalkylene-based polymer (A), it is possible to improve adhesiveness and water-resistant adhesiveness between (i) a curable composition containing a polyoxyalkylene-based polymer having a hydrolyzable silyl group and (ii) concrete, mortar, and the like.

### <Hydrolyzable silyl group>

The polyoxyalkylene-based polymer (B) has a hydrolyzable silyl group represented by general formula (2) below.

-SiY₃ (2)

where each Y independently represents a hydroxy group or a hydrolyzable group.

Examples of Y include a hydroxy group; halogen; alkoxy groups such as a methoxy group, an ethoxy group, a propoxy group, an isopropoxy group, a butoxy group, and a tert-butoxy group; acyloxy groups such as an acetoxy group; a ketoximate group; an amino group; an amide group; an acid amide group; an aminooxy group; a mercapto group; an alkenyloxy group; and the like. Among these groups, the alkoxy groups such as a methoxy group and an ethoxy group are more preferable, the methoxy group and the ethoxy group are further preferable, and the methoxy group is particularly preferable, because these groups have gentle hydrolyzability and are easy to handle.

Specific examples of the hydrolyzable silyl group include a trimethoxysilyl group, a triethoxysilyl group, a tris(2-propenyloxy)silyl group, a triacetoxysilyl group, and the like. Among these, the trimethoxysilyl group and the triethoxysilyl group are preferable, the trimethoxysilyl group is more preferable, because these groups have high activity and can achieve favorable curability.

The number of hydrolyzable silyl groups which are contained in one molecule of the polyoxyalkylene-based polymer (B) is, on average, preferably not less than 1.0, more preferably not less than 1.2, further preferably not less than 1.5. The upper limit is, on average, preferably not more than 6.0, more preferably not more than 5.0, further preferably not more than 4.0. A range of the number of hydrolyzable silyl groups contained in one molecule is preferably not less than 1.0 and not more than 6.0, more preferably not less than 1.2 and not more than 5.0, further preferably not less than 1.5 and not more than 4.0.

### <Main chain structure>

The polyoxyalkylene-based polymer (B) has three or more terminal structures in one molecule.

The terminal structure refers to a site located at a terminal of the polyoxyalkylene-based polymer. In a case of a polyoxyalkylene-based polymer obtained by polymerizing alkylene oxide with a hydroxy group-containing initiator, the number of terminal structures and the number of hydroxy groups in the initiator are the same.

The number of terminal structures in one molecule is not less than three, preferably not less than three and not more than six, more preferably not less than three and not more than four, further preferably three.

The main chain of the polyoxyalkylene-based polymer (B) is a polymer having a repeating unit that is represented by - R²-O- (where R² is a linear or branched alkylene group having 1 to 14 carbon atoms). Here, R² is more preferably a linear or branched alkylene group having 2 to 4 carbon atoms. Specific examples of the repeating unit represented by -R²-O- include -CH₂O-, -CH₂CH₂O-, -CH₂CH(CH₃)O-, -CH₂C(CH₃)(CH₃)O-, - CH₂CH₂CH₂CH₂O-, and the like. Among these, -CH₂CH₂O- and -CH₂CH(CH₃)O- are preferable, -CH₂CH(CH₃)O- is more preferable.

The main chain structure of the polyoxyalkylene-based polymer (B) may contain a urethane bond, a urea bond, an ester bond, or the like, but preferably does not contain such a bond.

The number average molecular weight (as a polystyrene equivalent molecular weight by GPC) of the polyoxyalkylene-based polymer (B) is 1,000 to 10,000, preferably 2,000 to 8,000, more preferably 2,000 to 7,000, further preferably 2,000 to 6,000. In a case where the number average molecular weight falls within the above range, it is possible to obtain a primer composition which has low viscosity and is easily applied.

A molecular weight distribution (Mw/Mn) of the polyoxyalkylene-based polymer (B) is not particularly limited, and is preferably narrow. Specifically, the molecular weight distribution is preferably not more than 1.6, more preferably not more than 1.4, further preferably not more than 1.3, particularly preferably not more than 1.2. The molecular weight distribution of the polyoxyalkylene-based polymer (B) can be obtained from the number average molecular weight and the weight average molecular weight which are obtained by GPC measurement.

In a case where, in the polyoxyalkylene-based polymer (B), the number average molecular weight of the main chain is 2,000 to 6,000, the number of terminal structures in one molecule is three, and the hydrolyzable silyl group is a trimethoxysilyl group, it is considered that a primer composition which has low viscosity and improved adhesiveness can be obtained.

### <Method for producing polyoxyalkylene-based polymer (B)>

As the method for producing the polyoxyalkylene-based polymer (B), a method similar to the forgoing methods (i) through (iii) for producing the polyoxyalkylene-based polymer (A) can be used.

Examples of the hydroxy group-containing initiator used in the methods (i) and (ii) include initiators each having three or more hydroxy groups, such as glycerin, pentaerythritol, and polyoxypropylene triol having a low molecular weight.

As the epoxy compound used in the methods (i) and (ii), any of the epoxy compounds described in <<Polyoxyalkylenebased polymer (A)>> above can be used.

As the carbon-carbon unsaturated group used in the method (i), any of the carbon-carbon unsaturated groups described in <<Polyoxyalkylene-based polymer (A)>> above can be used.

As the method for converting the hydroxy group into the carbon-carbon unsaturated group in the method (i), the method described in <<Polyoxyalkylene-based polymer (A)>> above can be used.

As the halogenated hydrocarbon compound used in the method (i), any of the halogenated hydrocarbon compounds described in <<Polyoxyalkylene-based polymer (A)>> above can be used.

The hydrosilane compound used in the method (i) can be trimethoxysilane, triethoxysilane, tris(2-propenyloxy)silane, triacetoxysilane, or the like.

The hydrosilylation reaction used in the method (i) is accelerated by various catalysts. As the hydrosilylation catalyst, any of known catalysts described in <<Polyoxyalkylene-based polymer (A)>> above can be used.

Examples of the compound which has both a hydrolyzable silyl group and a group that is reactive with a hydroxy group and which can be used in the method (ii) include: isocyanate silanes such as 3-isocyanate propyltrimethoxysilane, 3-isocyanate propyltriethoxysilane, isocyanatemethyltrimethoxysilane, and isocyanatemethyltriethoxysilane; mercaptosilanes such as 3-mercaptopropyltrimethoxysilane and 3-mercaptopropyltriethoxysilane; epoxysilanes such as 3-glycidoxypropyltrimethoxysilane and 3-glycidoxypropyltriethoxysilane; and the like.

As the polyisocyanate compound which can be used in the method (iii), isocyanates described in <<Polyoxyalkylenebased polymer (A)>> above can be used.

Examples of the compound which has both a hydrolyzable silyl group and a group that is reactive with an isocyanate group and which can be used in the method (iii) include: amino group-containing silanes such as γ-aminopropyltrimethoxysilane, γ-aminopropyltriethoxysilane, N-(β-aminoethyl)-γ-aminopropyltrimethoxysilane, N-(β-aminoethyl)-γ-aminopropyltriethoxysilane, γ-(N-phenyl)aminopropyltrimethoxysilane, N-ethylaminoisobutyltrimethoxysilane, and N-cyclohexylaminomethyltrimethoxysilane; hydroxy group-containing silanes such as γ-hydroxypropyltrimethoxysilane; mercapto group-containing silanes such as γ-mercaptopropyltrimethoxysilane; and the like.

As the polyoxyalkylene-based polymer (B), a polyoxyalkylene-based polymer having a plurality of hydrolyzable silyl groups at one terminal can also be used. As the method for producing a polyoxyalkylene-based polymer having a plurality of hydrolyzable silyl groups at one terminal, the method described in <<Polyoxyalkylene-based polymer (A)>> above can be used.

### <<Addition amounts of polyoxyalkylene-based polymer (A) and polyoxyalkylene-based polymer (B)>>

A ratio (A)/(B) between addition amounts of the polyoxyalkylene-based polymer (A) and the polyoxyalkylene-based polymer (B) is preferably 25/75 to 95/5, more preferably 40/60 to 90/10, further preferably 50/50 to 85/15. In a case where the ratio falls within the above range, it is possible to obtain a primer composition which has low viscosity and improved adhesiveness.

### <<Amine compound (C)>>

The primer composition in accordance with an embodiment of the present invention contains an amine compound that has two hydrolyzable silyl groups. By containing the amine compound (C), it is possible to improve adhesiveness between (i) a curable composition containing a polyoxyalkylene-based polymer having a hydrolyzable silyl group and (ii) concrete, mortar, and the like.

The amine compound (C) has two hydrolyzable silyl groups. The hydrolyzable silyl group can be any of the silyl groups which have been described as hydrolyzable silyl groups of the polyoxyalkylene-based polymer (A) and the polyoxyalkylene-based polymer (B). The hydrolyzable silyl group is preferably a dimethoxymethylsilyl group, a diethoxymethylsilyl group, a trimethoxysilyl group, or a triethoxysilyl group, more preferably a dimethoxymethylsilyl group, a trimethoxysilyl group, or a triethoxysilyl group, further preferably a dimethoxymethylsilyl group or a trimethoxysilyl group.

The amine compound (C) preferably does not contain a siloxane bond (Si-O-Si).

The amine compound (C) has one or more amino groups. The number of amino groups is preferably one, in order to further improve adhesiveness with concrete, mortar, and the like.

Specific examples of the amino compound (C) include bis(3-triethoxysilylpropyl)amine, bis(3-trimethoxysilylpropyl)amine, and the like. These compounds are available from Evonik as Dynasylan 1122 and Dynasylan 1124.

An addition amount of the amine compound (C) is 12 parts by weight to 50 parts by weight, preferably 12 parts by weight to 40 parts by weight, more preferably 17 parts by weight to 40 parts by weight, further preferably 25 parts by weight to 40 parts by weight, most preferably 25 parts by weight to 35 parts by weight, with respect to a combined total of 100 parts by weight of the polyoxyalkylene-based polymer (A) and the polyoxyalkylene-based polymer (B). In a case where the addition amount falls within the above range, water-resistant adhesiveness between (i) a curable composition containing a polyoxyalkylene-based polymer having a hydrolyzable silyl group and (ii) concrete, mortar, and the like is improved.

### <<Primer composition>>

To the primer composition in accordance with an embodiment of the present invention, a silanol condensation catalyst, an adhesiveness imparting agent different from the amine compound (C), a dehydrating agent, a plasticizer, a solvent, a diluent, an antioxidant, a photo stabilizer, an ultraviolet absorbent, and/or a filler may be added as additives in addition to the polyoxyalkylene-based polymer (A), the polyoxyalkylene-based polymer (B), and the amine compound (C).

### <Silanol condensation catalyst>

The primer composition in accordance with an embodiment of the present invention may contain a silanol condensation catalyst that condenses the hydrolyzable silyl groups in the polyoxyalkylene-based polymer (A) and the polyoxyalkylene-based polymer (B).

Examples of the silanol condensation catalyst include organotin compounds, metal salts of carboxylic acids, amine compounds, carboxylic acids, alkoxy metals, and the like.

Specific examples of the organotin compounds include dibutyltin dilaurate, dibutyltin dioctanoate, dibutyltin bis(butyl maleate), dibutyltin diacetate, dibutyltin oxide, dibutyltin bis(acetylacetonate), dioctyltin bis(acetylacetonate), dioctyltin dilaurate, dioctyltin distearate, dioctyltin diacetate, dioctyltin oxide, a reaction product of a dibutyltin compound and a silicate compound, a reaction product of a dioctyltin compound and a silicate compound (such as a reaction product of bis(acetyloxy)dioctyltin and tetraethyl silicate ester), a reaction product of a dibutyltin compound and phthalate ester, and the like.

Specific examples of the metal salts of carboxylic acids include tin carboxylate, bismuth carboxylate, titanium carboxylate, zirconium carboxylate, iron carboxylate, potassium carboxylate, and calcium carboxylate. Specific examples include iron(II) 2-ethylhexanoate, iron(III) 2-ethylhexanoate, titanium 2-ethylhexanoate, vanadium 2-ethylhexanoate, calcium 2-ethylhexanoate, potassium 2-ethylhexanoate, barium 2-ethylhexanoate, manganese 2-ethylhexanoate, nickel 2-ethylhexanoate, cobalt 2-ethylhexanoate, zirconium 2-ethylhexanoate, iron(II) neodecanoate, iron(III) neodecanoate, titanium neodecanoate, vanadium neodecanoate, calcium neodecanoate, potassium neodecanoate, barium neodecanoate, zirconium neodecanoate, iron(II) oleate, iron(III) oleate, titanium oleate, calcium oleate, potassium oleate, cobalt oleate, zirconium oleate, iron naphthenate, iron naphthenate, titanium naphthenate, calcium naphthenate, potassium naphthenate, cobalt naphthenate, zirconium naphthenate, and the like.

Specific examples of the amine compounds include: amines such as octylamine, 2-ethylhexylamine, laurylamine, and stearylamine; nitrogen-containing heterocyclic compounds such as pyridine, 1,8-diazabicyclo[5,4,0]undecene-7 (DBU), and 1,5-diazabicyclo[4,3,0]nonene-5 (DBN); guanidines such as guanidine, phenylguanidine, and diphenylguanidine; biguanides such as butylbiguanide, 1-o-tolylbiguanide, and 1-phenylbiguanide; amino group-containing silane coupling agents; ketimine compounds; and the like.

Specific examples of the carboxylic acids include acetic acid, propionic acid, butyric acid, 2-ethyl hexanoic acid, lauric acid, stearic acid, oleic acid, linoleic acid, neodecanoic acid, versatic acid, and the like.

Specific examples of the alkoxy metals include: titanium compounds such as tetrabutyltitanate, titanium tetrakis(acetylacetonate), and diisopropoxytitanium bis(ethylacetocetate); aluminium compounds such as aluminum tris(acetylacetonate) and diisopropoxyaluminum ethyl acetoacetate; and zirconium compounds such as zirconium tetrakis(acetylacetonate).

Two or more different types of catalysts may be used in combination as the silanol condensation catalyst.

The amount of the silanol condensation catalyst used is preferably 0.001 parts by weight to 20 parts by weight, more preferably 0.01 parts by weight to 10 parts by weight, further preferably 0.01 parts by weight to 5 parts by weight, most preferably 0.01 parts by weight to 3 parts by weight, with respect to a combined total of 100 parts by weight of the polyoxyalkylene-based polymer (A) and the polyoxyalkylene-based polymer (B).

### <Adhesiveness imparting agent different from amine compound (C)>

The primer composition in accordance with an embodiment of the present invention contains the amine compound (C) as an adhesiveness imparting agent. The primer composition may contain an adhesiveness imparting agent different from the amine compound (C).

As the adhesiveness imparting agent, a silane coupling agent or a reaction product of the silane coupling agent can be added.

Specific examples of the silane coupling agent include: amino group-containing silanes such as γ-aminopropyltrimethoxysilane, γ-aminopropylmethyldimethoxysilane, N-β-aminoethyl-γ-aminopropyltrimethoxysilane, N-β-aminoethyl-γ-aminopropylmethyldimethoxysilane, N-phenyl-γ-aminopropyltrimethoxysilane, and (2-aminoethyl)aminomethyltrimethoxysilane; isocyanate group-containing silanes such as γ-isocyanatepropyltrimethoxysilane, γ-isocyanatepropyltriethoxysilane, γ-isocyanatepropylmethyldimethoxysilane, α-isocyanatemethyltrimethoxysilane, and α-isocyanatemethyldimethoxymethylsilane; mercapto group-containing silanes such as γ-mercaptopropyltrimethoxysilane, γ-mercaptopropyltriethoxysilane, and γ-mercaptopropylmethyldimethoxysilane; and epoxy group-containing silanes such as γ-glycidoxypropyltrimethoxysilane and β-(3,4-epoxycyclohexyl)ethyltrimethoxysilane.

As the adhesiveness imparting agent, it is possible to use any of the following: condensates of various silane coupling agents, such as a condensate of aminosilane and a condensate of aminosilane and the other alkoxysilane; and reaction products of various silane coupling agents, such as a reaction product of aminosilane and epoxysilane and a reaction product of aminosilane and (meth)acrylic group-containing silane. Specific examples of commercially available products of such an adhesiveness imparting agent include Dynasylan 1146.

One type of these adhesiveness imparting agents may be used alone, or two or more types thereof may be used in combination.

The amount of the adhesiveness imparting agent different from the amine compound (C) used is preferably 0.1 parts by weight to 40 parts by weight, more preferably 1.0 part by weight to 30 parts by weight, more preferably 3.0 parts by weight to 20 parts by weight, with respect to a combined total of 100 parts by weight of the polyoxyalkylene-based polymer (A) and the polyoxyalkylene-based polymer (B).

### <Dehydrating agent>

The primer composition in accordance with an embodiment of the present invention may contain a dehydrating agent from the viewpoint of improving storage stability. The dehydrating agent is preferably an alkoxysilane compound that can react with water. Specific examples of the dehydrating agent include n-propyltrimethoxysilane, vinyltrimethoxysilane, vinylmethyldimethoxysilane, γ-mercaptopropylmethyldimethoxysilane, γ-mercaptopropylmethyldiethoxysilane, and γ-glycidoxypropyltrimethoxysilane. A condensate in which the alkoxysilane is partially condensed can also be used as a dehydrating agent.

The amount of the dehydrating agent used is preferably 0.1 parts by weight to 20 parts by weight, more preferably 1.0 part by weight to 10 parts by weight, further preferably 1.0 part by weight to 5.0 parts by weight, with respect to a combined total of 100 parts by weight of the polyoxyalkylene-based polymer (A) and the polyoxyalkylene-based polymer (B).

### <Plasticizer>

The primer composition in accordance with an embodiment of the present invention may contain a plasticizer. Specific examples of the plasticizer include phthalate ester compounds such as dibutyl phthalate, diisononyl phthalate (DINP), diheptyl phthalate, di(2-ethylhexyl)phthalate, diisodecyl phthalate (DIDP), and butylbenzyl phthalate; terephthalic ester compounds such as bis(2-ethylhexyl)-1,4-benzenedicarboxylate; non-phthalic ester compounds such as 1,2-cyclohexanedicarboxylic acid diisononyl ester (specifically, product name: Hexamoll DINCH (manufactured by BASF); aliphatic polyvalent carboxylic ester compounds such as dioctyl adipate, dioctyl sebacate, dibutyl sebacate, diisodecyl succinate, and tributyl acetylcitrate; unsaturated fatty acid ester compounds such as butyl oleate and methyl acetylricinoleate; phenyl alkylsulfonate esters (specifically, product name: Mesamoll (manufactured by LANXESS)); phosphoric ester compounds; trimellitic acid ester compounds; chlorinated paraffins; hydrocarbon-based oils such as alkyldiphenyl and partially hydrogenated terphenyl; process oils; and epoxy plasticizers such as epoxidized soybean oil and benzyl epoxy stearate.

A polymeric plasticizer can also be used. Specific examples of the polymeric plasticizer include vinyl-based polymers; polyester-based plasticizers; polyethers including (i) polyether polyols each having a number average molecular weight of not less than 500, such as polyethylene glycol and polypropylene glycol, and (ii) derivatives obtained by converting hydroxy groups of these polyether polyols into ester groups, ether groups, or the like; polystyrenes; hydrocarbon-based polymers such as polybutadiene, polybutene, polyisobutylene, butadiene-acrylonitrile, and polychloroprene; and the like.

The amount of the plasticizer used is preferably 5 parts by weight to 150 parts by weight, more preferably 10 parts by weight to 120 parts by weight, further preferably 20 parts by weight to 100 parts by weight, with respect to a combined total of 100 parts by weight of the polyoxyalkylene-based polymer (A) and the polyoxyalkylene-based polymer (B). In a case where the amount of the plasticizer used is less than 5 parts by weight, an effect of the plasticizer is not exhibited. In a case where the amount of the plasticizer used is more than 150 parts by weight, the cured product has insufficient mechanical strength. One of these plasticizers may be used alone or two or more types thereof may be used in combination.

### <Solvent, diluent>

The primer composition in accordance with an embodiment of the present invention may contain a solvent or a diluent. The solvent and the diluent are not particularly limited, and aliphatic hydrocarbon, aromatic hydrocarbon, alicyclic hydrocarbon, halogenated hydrocarbon, alcohol, ester, ketone, ether, or the like can be used.

The amount of the solvent or the diluent used is preferably 5 parts by weight to 50 parts by weight, more preferably 5 parts by weight to 20 parts by weight, further preferably 5 parts by weight to 10 parts by weight, with respect to a combined total of 100 parts by weight of the polyoxyalkylene-based polymer (A) and the polyoxyalkylene-based polymer (B).

### <Antioxidant>

The primer composition in accordance with an embodiment of the present invention may contain an antioxidant (anti-aging agent). Examples of the antioxidant include hindered phenol-based antioxidants, monophenolbased antioxidants, bisphenol-based antioxidants, and polyphenol-based antioxidants.

Examples of the antioxidant include BHT, IRGANOX 245, IRGANOX 1010, IRGANOX 1035, IRGANOX 1076, IRGANOX 1135, IRGANOX 1330, IRGANOX 1520, and SONGNOX 1076. Similarly, it is possible to use any of hindered amine-based photo stabilizers such as TINUVIN 622LD, TINUVIN 144, TINUVIN 292, CHIMASSORB 944LD, CHIMASSORB 119FL (which are manufactured by BASF); ADK STAB LA-57, ADK STAB LA-62, ADK STAB LA-67, ADK STAB LA-63, ADK STAB LA-68 (which are manufactured by ADEKA Corporation); SANOL LS-2626, SANOL LS-1114, SANOL LS-744 (which are manufactured by Sankyo Lifetech Co., Ltd.); and NOCRAC CD (manufactured by Ouchi Shinko Chemical Industrial Co., Ltd.). Alternatively, it is possible to use any of antioxidants such as SONGNOX 4120, NAUGARD 445, and OKABEST CLX050.

Specific examples of the antioxidant are also disclosed in Japanese Patent Application Publication Tokukaihei No. 4-283259 and Japanese Patent Application Publication Tokukaihei No. 9-194731.

The amount of the antioxidant used is preferably 0.1 parts by weight to 10 parts by weight and more preferably 0.2 parts by weight to 5 parts by weight, with respect to a combined total of 100 parts by weight of the polyoxyalkylene-based polymer (A) and the polyoxyalkylene-based polymer (B).

### <Photo stabilizer>

The primer composition in accordance with an embodiment of the present invention may contain a photo stabilizer. Using a photo stabilizer makes it possible to prevent deterioration of the cured product due to photooxidation. Examples of the photo stabilizer include benzotriazole-based compounds, hindered amine-based compounds, and benzoate-based compounds. The hindered amine-based compounds are particularly preferable.

Examples of the hindered amine-based photo stabilizer include TINUVIN 123, TINUVIN 144, TINUVIN 249, TINUVIN 292, TINUVIN 312, TINUVIN 622LD, TINUVIN 765, TINUVIN 770, TINUVIN 880, TINUVIN 5866, TINUVIN B97, CHIMASSORB 119FL, and CHIMASSORB 944LD (which are manufactured by BASF); ADK STAB LA-57, LA-62, LA-63, LA-67, and LA-68 (which are manufactured by ADEKA Corporation); SANOL LS-292, LS-2626, LS-765, LS-744, and LS-1114 (which are manufactured by Sankyo Lifetech Co., Ltd.); SABOSTAB UV91, SABOSTAB UV119, SONGSORB CS5100, SONGSORB CS622, and SONGSORB CS944 (which are manufactured by SONGWON); NOCRAC CD (Ouchi Shinko Chemical Industrial Co., Ltd.); and the like.

The amount of the photo stabilizer used is preferably 0.1 parts by weight to 10 parts by weight, and more preferably 0.2 parts by weight to 5 parts by weight, with respect to a combined total of 100 parts by weight of the polyoxyalkylene-based polymer (A) and the polyoxyalkylene-based polymer (B).

### <Ultraviolet absorbent>

The primer composition in accordance with an embodiment of the present invention may contain an ultraviolet absorbent. Using an ultraviolet absorbent makes it possible to enhance weather resistance of the surface of the cured product. Examples of the ultraviolet absorbent include benzophenone-based compounds, benzotriazole-based compounds, salicylate-based compounds, triazine-based compounds, substituted acrylonitrile-based compounds, metal chelating compounds, and the like. The benzotriazole-based compounds are particularly preferable. Examples of the benzotriazole-based compound include TINUVIN 234, TINUVIN 326, TINUVIN 327, TINUVIN 328, TINUVIN 329, TINUVIN 350, TINUVIN 571, TINUVIN 900, TINUVIN 928, TINUVIN 1130, and TINUVIN 1600 (which are manufactured by BASF); and SONGSORB 3290 (manufactured by SONGWON). Examples of the triazine-based compounds include TINUVIN 400, TINUVIN 405, TINUVIN 477, TINUVIN 1577ED (which are manufactured by BASF); SONGSORB CS400 and SONGSORB 1577 (manufactured by SONGWON); and the like. Examples of the benzophenone-based compound include SONGSORB 8100 (manufactured by SONGWON).

The amount of the ultraviolet absorbent used is preferably 0.1 parts by weight to 10 parts by weight and more preferably 0.2 parts by weight to 5 parts by weight, with respect to a combined total of 100 parts by weight of the polyoxyalkylene-based polymer (A) and the polyoxyalkylene-based polymer (B).

### <Filler>

The primer composition in accordance with an embodiment of the present invention may contain various fillers. Examples of the fillers include heavy calcium carbonate, colloidal calcium carbonate, magnesium carbonate, silious earth, clay, talc, titanium oxide, fumed silica, precipitable silica, crystalline silica, fused silica, silicic anhydride, hydrous silicic acid, carbon black, ferric oxide, an aluminum fine powder, zinc oxide, active zinc oxide, a PVC powder, a PMMA powder, glass fibers, a filament, and the like.

The amount of the filler used is preferably 1 part by weight to 100 parts by weight and more preferably 5 parts by weight to 50 parts by weight, with respect to a combined total of 100 parts by weight of the polyoxyalkylene-based polymer (A) and the polyoxyalkylene-based polymer (B).

### <<Preparation of primer composition>>

The primer composition in accordance with an embodiment of the present invention can be prepared as a one-component type in which all components are blended in advance, which is stored in a sealed state, and which is cured by moisture in the air after being applied. Alternatively, the primer composition can be prepared as a two-component type in which components such as a curing catalyst, a filler, a plasticizer, and water are separately blended as a curing agent and the curing agent and a polymer composition are mixed before use. In terms of the workability, the one-component type primer composition is preferable.

### <<Laminated body containing primer composition>>

The primer composition in accordance with an embodiment of the present invention is preferably used in adhesion between a base material layer and various curable compositions.

The base material layer is not particularly limited, and examples thereof include: inorganic materials such as concrete, mortar, ceramic, and glass; various metals such as iron, stainless steel, aluminum, nickel, zinc, and copper; synthetic resin materials such as acrylic resin, phenolic resin, epoxy resin, polycarbonate resin, polybutylene terephthalate resin, acrylic electrodeposition paint, and fluorine paint; stone such as marble and granite; and the like. Among these, the base material layer is preferably concrete, mortar, glass, iron, stainless steel, aluminum, acrylic resin, epoxy resin, or polycarbonate resin, more preferably concrete or mortar.

The curable composition is not particularly limited, and examples thereof include: polymers each having a hydrolyzable silyl group such as a polyoxyalkylene-based polymer having a hydrolyzable silyl group, a (meth)acrylic ester-based polymer having a hydrolyzable silyl group, and a hydrocarbon-based polymer having a hydrolyzable silyl group; urethane-based polymers; acrylic polymers; polysulfides; epoxy resins; and the like. Among these, the curable composition is preferably the polymer having a hydrolyzable silyl group and more preferably the polyoxyalkylene-based polymer having a hydrolyzable silyl group.

In particular, the curable composition is preferably used in adhesion between concrete or mortar and a composition containing a polyoxyalkylene-based polymer having a hydrolyzable silyl group.

The laminated body containing the primer composition in accordance with an embodiment of the present invention is: preferably a laminated body including a base material layer (X), a cured product layer (Y) obtained by curing the primer composition in accordance with an embodiment of the present invention, and a cured product layer (Z) obtained by curing a curable composition, characterized in that the base material layer (X) and the cured product layer (Y) make contact with each other and the cured product layer (Y) and the cured product layer (Z) make contact each other; and more preferably a laminated body including a base material layer (X) that is made of concrete or mortar, a cured product layer (Y) that is obtained by curing the primer composition of the present invention, and a cured product layer (Z) that is obtained by curing a composition containing a polyoxyalkylene-based polymer having a hydrolyzable silyl group, characterized in that the base material layer (X) and the cured product layer (Y) make contact with each other, and the cured product layer (Y) and the cured product layer (Z) make contact with each other.

A method for producing the laminated body is preferably a method in which: the primer composition in accordance with an embodiment of the present invention is applied on a base material that is concrete or mortar; the applied primer composition is cured; and then a composition containing a polyoxyalkylene-based polymer having a hydrolyzable silyl group is applied.

A method for applying the primer composition in accordance with an embodiment of the present invention is not particularly limited, and a conventionally known application means (e.g., application using a brush, application using a roller, application using a spray, or the like) can be widely employed. The application amount is typically approximately 50 g to 300 g, preferably approximately 50 g to 150 g, per 1 m² of an applied area on the base material. In order to form a coating film on the base material, after application, the primer composition may be dried at room temperature or heated at a temperature of approximately 50°C to 120°C.

### <Curable composition containing polyoxyalkylene-based polymer having hydrolyzable silyl group>

Examples of the curable composition that contains a polyoxyalkylene-based polymer having a hydrolyzable silyl group include a sealing material, an adhesive agent, and a coating material each containing a polyoxyalkylene-based polymer having a hydrolyzable silyl group.

As the hydrolyzable silyl group of the polyoxyalkylene-based polymer having a hydrolyzable silyl group, the hydrolyzable silyl groups described in <<Polyoxyalkylenebased polymer (A)>> and <<Polyoxyalkylene-based polymer (B)>> above can be used.

The polyoxyalkylene-based polymer having a hydrolyzable silyl group can be obtained by a method in which: an epoxy compound is polymerized with a hydroxy group-containing initiator to obtain a hydroxy group-terminated polyoxyalkylene-based polymer; and a hydroxy group terminal of the hydroxy group-terminated polyoxyalkylene-based polymer is converted into a hydrolyzable silyl group.

The curable composition that contains a polyoxyalkylene-based polymer having a hydrolyzable silyl group may contain, as an additive in addition to the polyoxyalkylene-based polymer having a hydrolyzable silyl group, a silanol condensation catalyst, an adhesiveness imparting agent, a dehydrating agent, a plasticizer, a solvent, a diluent, an antioxidant, a photo stabilizer, an ultraviolet absorbent, a filler, a physical property adjusting agent, a tackifier resin, a compound containing an epoxy group, a photo curable substance, an oxygen curable substance, an epoxy resin, and the like.

### <<Applications>>

The primer composition in accordance with an embodiment of the present invention is preferably used as a primer for various sealing materials, adhesive agents, or coating materials, and is more preferably used as a primer for a sealing material or adhesive agent.

Applications of using the primer composition in accordance with an embodiment of the present invention include: applications as sealing materials such as a joint sealing material for exterior materials such as a siding board, a sealing material for direct glazing, a sealing material for double glazing, and a sealing material for working joints; applications as adhesive agents such as an adhesive agent for tiling, an adhesive agent for exterior panels, an adhesive agent for interior panels, an adhesive agent for stone pitching, an adhesive agent for flooring, an adhesive agent for waterproof sheets, an adhesive agent for vehicle panels, and an adhesive agent for assembly of electrical, electronic, and precision apparatuses; applications as coating materials such as a coated waterproof material, a concrete spalling prevention material, and an air barrier coating; and the like.

The primer composition in accordance with an embodiment of the present invention has particularly favorable adhesiveness with concrete or mortar. Thus, the primer composition is particularly useful as a primer to improve adhesion between concrete or mortar and a sealing material, adhesion between a concrete or mortar undercoat material and an adhesive agent for flooring, adhesion between concrete or mortar and an adhesive agent for tiling, adhesion between concrete or mortar and a crack repairing material, adhesion between concrete or mortar and a coating material, and the like.

The present invention is not limited to the embodiments, but can be altered by a skilled person in the art within the scope of the claims. The present invention also encompasses, in its technical scope, any embodiment derived by combining technical means disclosed in differing embodiments.

An aspect of the present invention encompasses the following features.

<1> A primer composition, containing:
   a polyoxyalkylene-based polymer (A) having a hydrolyzable silyl group represented by general formula (1) below,

      -SiR¹₃-ₐXₐ (1)
   where each R¹ independently represents a hydrocarbon group which has 1 to 10 carbon atoms and which may have a substituent constituted by a hetero atom-containing group or a halogen atom, each X independently represents a hydroxy group or a hydrolyzable group, and "a" represents 1 or 2;
   a polyoxyalkylene-based polymer (B) that has a hydrolyzable silyl group represented by general formula (2) below, that has three or more terminal structures, and that has a number average molecular weight of 1,000 to 10,000,

      -SiY₃ (2)
   where each Y independently represents a hydroxy group or a hydrolyzable group; and
   an amine compound (C) that has two hydrolyzable silyl groups,
   an amount of the amine compound (C) being 12 parts by weight to 50 parts by weight, with respect to a combined total of 100 parts by weight of the polyoxyalkylene-based polymer (A) and the polyoxyalkylene-based polymer (B).
<2> The primer composition described in <1>, in which: the polyoxyalkylene-based polymer (B) has a number average molecular weight of 1,000 to 6,000.
<3> The primer composition described in <1> or <2>, in which: the amine compound (C) has one amino group.
<4> The primer composition described in any one of < 1 > through <3>, in which: a main chain structure of the polyoxyalkylene-based polymer (A) is a straight chain.
<5> The primer composition described in any one of <1> through <4>, in which: the primer composition is used in adhesion between concrete or mortar and a curable composition that contains a polyoxyalkylene-based polymer having a hydrolyzable silyl group.
<6> A laminated body, including: a base material layer (X) that is made of concrete or mortar; a cured product layer (Y) that is obtained by curing the primer composition described in any one of <1> through <4>; and a cured product layer (Z) that is obtained by curing a curable composition which contains a polyoxyalkylene-based polymer having a hydrolyzable silyl group, the base material layer (X) and the cured product layer (Y) making contact with each other, and the cured product layer (Y) and the cured product layer (Z) making contact with each other.

### Examples

The following description will discuss embodiments of the present invention in greater detail with reference to Examples. Note, however, that the present invention is not limited to the following Examples.

### (Number average molecular weight)

Number average molecular weights in Examples are GPC molecular weights measured under the following conditions.

Solution sending system: HLC-8220GPC available from Tosoh Corporation
Column: TSKgel SuperH series available from Tosoh Corporation
Solvent: Tetrahydroxyfuran (THF)
Molecular weight: in terms of polystyrene
Measurement temperature: 40°C

The average number of silyl groups introduced per terminal or per molecule of the polymer shown in Examples was calculated based on the NMR measurement result and the structure of the polymer.

### (Synthesis Example 1) Polymer (A-1)

Propylene oxide was polymerized with use of (i) polyoxypropylene glycol which was an initiator and which had a number average molecular weight of approximately 4,500 and (ii) a zinc hexacyanocobaltate glyme complex catalyst. Thus obtained was polyoxypropylene (P-1) which had hydroxy groups at both terminals and which had a number average molecular weight of 14,300 and a molecular weight distribution of Mw/Mn = 1.21. Subsequently, 1.2 molar equivalents of sodium methoxide with respect to the hydroxy groups of the obtained hydroxy group-terminated polyoxypropylene (P-1) was added as a 28% methanol solution. The methanol was distilled off by vacuum devolatilization, and then, with respect to the hydroxy groups of the polymer (P-1), 1.5 molar equivalents of allyl chloride was added to convert the hydroxy groups at the terminals into allyl groups. After the conversion, devolatilization was carried out under reduced pressure to remove unreacted allyl chloride contained in the reaction system. The obtained unpurified polyoxypropylene was mixed with n-hexane and water, and stirring was carried out. The water was then removed by centrifugal separation to obtain a hexane solution. The hexane was devolatilized from the obtained hexane solution under reduced pressure to remove a metal salt in the polymer. In this manner, polyoxypropylene (Q-1) having the allyl groups at the terminals was obtained. To 500 g of this polymer (Q-1), 50 µL of a platinum-divinyldisiloxane complex solution (3% by weight of isopropanol solution in terms of platinum) was added. While the obtained solution was stirred, 8.6 g of dimethoxymethylsilane was slowly dripped into the solution. After this mixed solution was reacted at 100°C for 2 hours, unreacted dimethoxymethylsilane was distilled off under reduced pressure. Thus obtained was polyoxypropylene (A-1) which had dimethoxymethylsilyl groups at terminals and which had a number average molecular weight of 14,600. It was found that the polymer (A-1) had 0.8 dimethoxymethylsilyl groups on average at one terminal and 1.5 dimethoxymethylsilyl groups on average in one molecule.

### (Synthesis Example 2) Polymer (A'-1)

To 500 g of the polymer (Q-1) obtained in Synthesis Example 1, 50 µL of a platinum-divinyldisiloxane complex solution (3% by weight of isopropanol solution in terms of platinum) was added. While the obtained solution was stirred, 8.6 g of trimethoxysilane was slowly dripped into the solution. After a 2-hour reaction at 100°C, unreacted trimethoxysilane was distilled off under reduced pressure. Thus obtained was polyoxypropylene (A'-1) which had trimethoxysilyl groups at terminals and which had a number average molecular weight of 14,600. It was found that the polymer (A'-1) had 0.8 trimethoxysilyl groups on average at one terminal and 1.5 trimethoxysilyl groups on average in one molecule.

### (Synthesis Example 3) Polymer (B-1)

1.2 molar equivalents of sodium methoxide with respect to the hydroxy groups of polyoxypropylene triol having a number average molecular weight of approximately 4,500 was added as a 28% methanol solution. The methanol was distilled off by vacuum devolatilization, and then, with respect to the hydroxy groups of the polyoxypropylene triol, 1.5 molar equivalents of allyl chloride was added to convert the hydroxy groups at the terminals into allyl groups. After the conversion, devolatilization was carried out under reduced pressure to remove unreacted allyl chloride contained in the reaction system. The obtained unpurified polyoxypropylene was mixed with n-hexane and water, and stirring was carried out. The water was then removed by centrifugal separation to obtain a hexane solution. The hexane was devolatilized from the obtained hexane solution under reduced pressure to remove a metal salt in the polymer. In this manner, polyoxypropylene (Q-2) having the allyl groups at the terminals was obtained. To 500 g of this polymer (Q-2), 50 µL of a platinum-divinyldisiloxane complex solution (3% by weight of isopropanol solution in terms of platinum) was added. While the obtained solution was stirred, 40.7 g of trimethoxysilane was slowly dripped into the solution. After a 2-hour reaction at 100°C, unreacted trimethoxysilane was distilled off under reduced pressure. Thus obtained was polyoxypropylene (B-1) which had trimethoxysilyl groups at terminals and which had a number average molecular weight of 5,200. It was found that the polymer (B-1) had 0.7 trimethoxysilyl groups on average at one terminal and 1.9 trimethoxysilyl groups on average in one molecule.

### (Synthesis Example 4) Polymer (B'-1)

To 500 g of the polymer (Q-2) obtained in Synthesis Example 3, 50 µL of a platinum-divinyldisiloxane complex solution (3% by weight of isopropanol solution in terms of platinum) was added. While the obtained solution was stirred, 8.6 g of dimethoxymethylsilane was slowly dripped into the solution. After this mixed solution was reacted at 100°C for 2 hours, unreacted dimethoxymethylsilane was distilled off under reduced pressure. Thus obtained was polyoxypropylene (B'-1) which had dimethoxymethylsilyl groups at terminals and which had a number average molecular weight of 5,000. It was found that the polymer (B'-1) had 0.7 dimethoxymethylsilyl groups on average at one terminal and 2.0 dimethoxymethylsilyl groups on average in one molecule.

### (Synthesis Example 5) Polymer (H-1)

Propylene oxide was polymerized with use of (i) polyoxypropylene glycol which was an initiator and which had a number average molecular weight of approximately 2,000 and (ii) a zinc hexacyanocobaltate glyme complex catalyst. Thus obtained was polyoxypropylene (P-2) which had hydroxy groups at both terminals and which had a number average molecular weight of 28,500. Next, with respect to the hydroxy groups of this hydroxy group-terminated polyoxypropylene (P-2) obtained, 1.2 molar equivalents of sodium methoxide was added as a 28% methanol solution. The methanol was distilled off by vacuum devolatilization, and then, with respect to the hydroxy groups of the polymer (P-2), 1.5 molar equivalents of allyl chloride was added to convert the hydroxy groups at the terminals into allyl groups. After the conversion, devolatilization was carried out under reduced pressure to remove unreacted allyl chloride contained in the reaction system. The obtained unpurified polyoxypropylene was mixed with n-hexane and water, and stirring was carried out. The water was then removed by centrifugal separation to obtain a hexane solution. The hexane was devolatilized from the obtained hexane solution under reduced pressure to remove a metal salt in the polymer. In this manner, polyoxypropylene (Q-3) having the allyl groups at the terminals was obtained. To 500 g of this polymer (Q-3), 50 µL of a platinum-divinyldisiloxane complex solution (3% by weight of isopropanol solution in terms of platinum) was added. While the obtained solution was stirred, 4.5 g of trimethoxysilane was slowly dripped into the solution. After a 2-hour reaction at 100°C, unreacted trimethoxysilane was distilled off under reduced pressure. Thus obtained was polyoxypropylene (H-1) which had trimethoxysilyl groups at terminals and which had a number average molecular weight of 29,100. It was found that the polymer (H-1) had 0.6 trimethoxysilyl groups on average at one terminal and 1.2 trimethoxysilyl groups on average in one molecule.

### (Synthesis Example 6) Polymer (H-2)

To 500 g of the polymer (Q-3) obtained in Synthesis Example 1, 50 µL of a platinum-divinyldisiloxane complex solution (3% by weight of isopropanol solution in terms of platinum) was added. While the obtained solution was stirred, 5.4 g of trimethoxysilane was slowly dripped into the solution. After a 2-hour reaction at 100°C, unreacted trimethoxysilane was distilled off under reduced pressure. Thus obtained was polyoxypropylene (H-2) which had trimethoxysilyl groups at terminals and which had a number average molecular weight of 28,900. It was found that the polymer (H-2) had 0.7 trimethoxysilyl groups on average at one terminal and 1.5 trimethoxysilyl groups on average in one molecule.

### (Preparation of curable composition)

With respect to 65 parts by weight of the polymer (H-1) and 35 parts by weight of the polymer (H-2), 100 parts by weight of diisononyl phthalate (manufactured by BASF, hereinafter DINP), 100 parts by weight of HAKUENKA CCR (manufactured by Shiraishi Calcium Kaisha, Ltd., heavy calcium carbonate), 142.4 parts by weight of Omyacarb 2T-AV (manufactured by OMYA, colloidal calcium carbonate), 12.5 parts by weight of Ti-Pure902 (manufactured by DuPont, titanium oxide), 26.4 parts by weight of CLEVERAC SLT (manufactured by Cleverly, amide wax), 1 part by weight of Addworks IBC 760 (manufactured by CLARIANT, a mixture of an ultraviolet absorbent, a photo stabilizer, and an antioxidant), and 1 part by weight of IRGANOX 245 (manufactured by BASF, ethylene-bis(oxyethylene)bis-(3-(5-tert-butyl-4-hydroxy-m-tolyl)propionate)) were mixed, and uniformly dispersed with use of a three-roll mill. Subsequently, 9.75 parts by weight of VP700 (manufactured by WERNER HOLLBECK, silane coupling agent), 5 parts by weight of Dynasylan VTMO (manufactured by Evonik, vinyltrimethoxysilane), and 0.5 parts by weight of TIB KAT423 (manufactured by TIB CHEMICALS, dioctyltin-silane mixture) were added, sufficiently mixed using a spatula, and uniformly mixed and defoamed using a planetary centrifugal mixer to obtain a curable composition (D).

### (Example 1)

With respect to 75 parts by weight of the polymer (A-1) described in Synthesis Example 1, 25 parts by weight of the polymer (B-1) described in Synthesis Example 3, 15 parts by weight of Dynasylan 1124 (manufactured by Evonik, bis(trimethoxysilylpropyl)amine) which is the amine compound (C), 15 parts by weight of Dynasylan 1146 (manufactured by Evonik, aminoalkyl group-modified alkylpolysiloxane), 3 parts by weight of Dynasylan AMMO (manufactured by Evonik, 3-aminopropyltrimethoxysilane), 2 parts by weight of Dynasylan VTMO, and 1.2 parts by weight of NEOSTANN S-1 (manufactured by NITTO KASEI CO., LTD., a reaction product of tetraethyl silicate ester and bis(acetyloxy)dioctyltin) were added, sufficiently mixed using a spatula, and then uniformly mixed and defoamed using a planetary centrifugal mixer to obtain a primer composition (E-1).

Using the obtained primer composition (E-1), the following ISO8340 test and ISO10590 test were carried out.

### (ISO8340 test): Test of adhesiveness to concrete base material

The primer composition (E-1) was applied with a brush to a concrete base material (manufactured by ROCHOLL, in conformance with ISO13640 Method 1, 71 mm × 12 mm × 25 mm) and cured at 23°C and at relative humidity of 50% for 1 hour. Subsequently, using the curable composition (D), an H-shaped test piece was prepared with a method in conformance with ISO8340, and aged at 23°C and at relative humidity of 50% for 28 days. After the aging, a tensile test was carried out at a test speed of 6 mm/min. Then, a state of adhesion retention (presence or absence of a peeled part) at 100% elongation was checked, and the following evaluation was carried out. The tensile test was carried out twice, and a numerical value of the tensile physical property was an average value of the two runs. The results are shown in Table 1.
A: Two H-shaped test pieces were evaluated, and it was found that the two test pieces each had no peeled part at 100% elongation of the cured product.
B: Two H-shaped test pieces were evaluated, and it was found that one had no peeled part and the other had a peeled part at 100% elongation of the cured product.
C: Two H-shaped test pieces were evaluated, and it was found that the two test pieces each had a peeled part at 100% elongation of the cured product.
Moreover, strength at break (TB) and elongation at break (EB) were measured. In addition, among fracture states of the curable composition (D) after breakage, a percentage of cohesive failure was calculated as a cohesive failure ratio. The results are shown in Table 1.

### (ISO10590 test): Test of water-resistant adhesiveness to concrete base material

The primer composition (E-1) was applied with a brush to a concrete base material (manufactured by ROCHOLL, in conformance with ISO13640 Method 1, 71 mm × 12 mm × 25 mm) and cured at 23°C and at relative humidity of 50% for 1 hour. Subsequently, using the curable composition (D), an H-shaped test piece was prepared with a method in conformance with ISO10590, and aged at 23°C and at relative humidity of 50% for 28 days. After the aging, the H-shaped test piece was immersed in water at 23°C for 4 days. The test piece was taken out and dried at 23°C and at relative humidity of 50% for 1 day. Then, a tensile test was carried out at a test speed of 6 mm/min. Then, a state of adhesion retention (presence or absence of a peeled part) at 100% elongation was checked, and the following evaluation was carried out. The results are shown in Table 1.
A: Two H-shaped test pieces were evaluated, and it was found that the two test pieces each had no peeled part at 100% elongation of the cured product.
B: Two H-shaped test pieces were evaluated, and it was found that one had no peeled part and the other had a peeled part at 100% elongation of the cured product.
C: Two H-shaped test pieces were evaluated, and it was found that the two test pieces each had a peeled part at 100% elongation of the cured product.
Moreover, strength at break (TB) and elongation at break (EB) were measured. In addition, among fracture states of the curable composition (D) after breakage, a percentage of cohesive failure was calculated as a cohesive failure ratio. The tensile test was carried out twice, and a numerical value of the tensile physical property was an average value of the two runs. The results are shown in Table 1.

### (Comparative Example 1)

A primer composition (E-2) was obtained with a method identical with that in Example 1, except that 25 parts by weight of the polymer (B'-1) was used instead of 25 parts by weight of the polymer (B-1). Using the obtained primer composition (E-2), the ISO8340 test and ISO10590 test identical with those in Example 1 were carried out. The results are shown in Table 1.

### (Comparative Example 2)

A primer composition (E-3) was obtained with a method identical with that in Example 1, except that 75 parts by weight of the polymer (A'-1) was used instead of 75 parts by weight of the polymer (A-1) and the amount of NEOSTANN S-1 was changed to 0.3 parts by weight. Using the obtained primer composition (E-3), the ISO8340 test and ISO10590 test identical with those in Example 1 were carried out. The results are shown in Table 1.

### (Comparative Example 3)

A primer composition (E-4) was obtained with a method identical with that in Example 1, except that 75 parts by weight of the polymer (A'-1) was used instead of 75 parts by weight of the polymer (A-1), 25 parts by weight of the polymer (B'-1) was used instead of 25 parts by weight of the polymer (B-1), and the amount of NEOSTANN S-1 was changed to 0.3 parts by weight. Using the obtained primer composition (E-4), the ISO8340 test and ISO10590 test identical with those in Example 1 were carried out. The results are shown in Table 1.

### (Comparative Example 4)

A primer composition (E-5) was obtained with a method identical with that in Example 1, except that the addition amount of Dynasylan 1146 was changed to 10 parts by weight and the addition amount of Dynasylan 1124 was changed to 10 parts by weight. Using the obtained primer composition (E-5), the ISO8340 test and ISO10590 test identical with those in Example 1 were carried out. The results are shown in Table 1.

### (Comparative Example 5)

A primer composition (E-6) was obtained with a method identical with that in Example 1, except that the addition amount of Dynasylan 1146 was changed to 5 parts by weight and the addition amount of Dynasylan 1124 was changed to 5 parts by weight. Using the obtained primer composition (E-6), the ISO8340 test and ISO10590 test identical with those in Example 1 were carried out. The results are shown in Table 1.

**[Table 1]**

| | | | Example 1 | Comparative Example 1 | Comparative Example 2 | Comparative Example 3 | Comparative Example 4 | Comparative Example 5 |
|---|---|---|---|---|---|---|---|---|
| Primer composition | | | E-1 | E-2 | E-3 | E-4 | E-5 | E-6 |
| Polyoxyalkylene-based polymer | Polymer (A) | A-1 | 75 | 75 | | | 75 | 75 |
| | Polymer (B) | B-1 | 25 | | 25 | | 25 | 25 |
| | | A'-1 | | | 75 | 75 | | |
| | | B'-1 | | 25 | | 25 | | |
| Amine compound (C) | | Dynasylan 1124 | 15 | 15 | 15 | 15 | 10 | 5 |
| Other adhesiveness imparting agent | | Dynasylan 1146 | 15 | 15 | 15 | 15 | 10 | 5 |
| | | Dynasylan AMMO | 3 | 3 | 3 | 3 | 3 | 3 |
| Dehydrating agent | | Dynasylan VTMO | 2 | 2 | 2 | 2 | 2 | 2 |
| Silanol condensation catalyst | | Neostann S-1 | 1.2 | 1.2 | 0.3 | 0.3 | 1.2 | 1.2 |
| ISO8340 test | Adhesion retention state at 100% elongation | | A | C | B | C | A | B |
| | Tensile physical property (average value of n=2) | TB (N/mm²) | 0.75 | 0.49 | 0.56 | 0.21 | 0.71 | 0.64 |
| | | EB (%) | 252 | 132 | 162 | 34 | 246 | 210 |
| | | Cohesive failure ratio (%) | 50 | 30 | 60 | 0 | 70 | 50 |
| ISO10590 test | Adhesion retention state at 100% elongation | | A | B | C | C | C | C |
| | Tensile physical property (average value of n=2) | TB (N/mm²) | 0.48 | 0.32 | 0.27 | 0.20 | 0.29 | 0.14 |
| | | EB (%) | 252 | 100 | 67 | 39 | 70 | 20 |
| | | Cohesive failure ratio (%) | 0 | 0 | 0 | 0 | 0 | 0 |

From Table 1, Example 1 in which the polyoxyalkylene-based polymer (A) and the polyoxyalkylene-based polymer (B) were used exhibited favorable adhesiveness and water-resistant adhesiveness to concrete. In contrast, the adhesiveness and water-resistant adhesiveness to concrete were inferior in Comparative Example 1 in which the polyoxyalkylene-based polymer having a dimethoxymethylsilyl group was used instead of the polyoxyalkylene-based polymer (B), Comparative Example 2 in which the polyoxyalkylene-based polymer having a trimethoxysilyl group was used instead of the polyoxyalkylene-based polymer (A), and Comparative Example 3 in which the polyoxyalkylene-based polymer having a trimethoxysilyl group was used instead of the polyoxyalkylene-based polymer (A) and the polyoxyalkylene-based polymer having a dimethoxymethylsilyl group was used instead of the polyoxyalkylene-based polymer (B).

Moreover, Comparative Examples 4 and 5 in which the contained amount of the amine compound (C) was less than 12 parts by weight relative to the combined total of 100 parts by weight of the polyoxyalkylene polymers (A) and (B) were inferior in water-resistant adhesiveness.

### (Example 2)

A primer composition (E-7) was obtained with a method identical with that in Example 1, except that Dynasylan 1146, which is an adhesiveness imparting agent, was not added. Using the obtained primer composition (E-7), the ISO8340 test and ISO10590 test identical with those in Example 1 were carried out. The results are shown in Table 2.

### (Comparative Example 6)

A primer composition (E-8) was obtained with a method identical with that in Example 1, except that Dynasylan 1124, which is the amine compound (C), was not added. Using the obtained primer composition (E-8), the ISO8340 test and ISO10590 test identical with those in Example 1 were carried out. The results are shown in Table 2.

**[Table 2]**

| | | | Example 2 | Example 1 | Comparative Example 6 |
|---|---|---|---|---|---|
| Primer composition | | | E-7 | E-1 | E-8 |
| Polyoxyalkylene-based polymer | Polymer (A) | A-1 | 75 | 75 | 75 |
| | Polymer (B) | B-1 | 25 | 25 | 25 |
| Amine compound (C) | | Dynasylan 1124 | 15 | 15 | |
| Other adhesiveness imparting agent | | Dynasylan 1146 | | 15 | 15 |
| | | Dynasylan AMMO | 3 | 3 | 3 |
| Dehydrating agent | | Dynasylan VTMO | 2 | 2 | 2 |
| Silanol condensation catalyst | | Neostann S-1 | 1.2 | 1.2 | 1.2 |
| ISO8340 test | Adhesion retention | state at 100% elongation | A | A | B |
| | Tensile physical property (average value of n=2) | TB (N/mm²) | 0.68 | 0.75 | 0.36 |
| | | EB (%) | A | 252 | 139 |
| | | Cohesive failure ratio (%) | 40 | 50 | 15 |
| ISO10590 test | Adhesion retention | state at 100% elongation | A | A | C |
| | Tensile physical property (average value of n=2) | TB (N/mm²) | 0.50 | 0.48 | 0.17 |
| | | EB (%) | 238 | 252 | 26 |
| | | Cohesive failure ratio (%) | 0 | 0 | 0 |

Table 2 also shows the result of Example 1 as a reference. From Table 2, Examples 1 and 2 in which the amine compound (C) was used exhibited favorable adhesiveness and water-resistant adhesiveness to concrete. In contrast, Comparative Example 6, in which the amine compound (C) was not used, was inferior in adhesiveness and water-resistant adhesiveness to concrete.

### (Example 3)

A primer composition (E-9) was obtained with a method identical with that in Example 1, except that Dynasylan 1146, which is an adhesiveness imparting agent, was not added and the addition amount of Dynasylan 1124, which is the amine compound (C), was changed to 20 parts by weight. Using the obtained primer composition (E-9), the ISO8340 test and ISO10590 test identical with those in Example 1 were carried out. The results are shown in Table 3.

### (Example 4)

A primer composition (E-10) was obtained with a method identical with that in Example 1, except that Dynasylan 1146, which is an adhesiveness imparting agent, was not added and the addition amount of Dynasylan 1124, which is the amine compound (C), was changed to 30 parts by weight. Using the obtained primer composition (E-10), the ISO8340 test and ISO10590 test identical with those in Example 1 were carried out. The results are shown in Table 3.

**[Table 3]**

| | | | Example 2 | Example 3 | Example 4 |
|---|---|---|---|---|---|
| Primer composition | | | E-7 | E-9 | E-10 |
| Polyoxyalkylene-based polymer | Polymer (A) | A-1 | 75 | 75 | 75 |
| | Polymer (B) | B-1 | 25 | 25 | 25 |
| Amine compound (C) | | Dynasylan 1124 | 15 | 20 | 30 |
| Other adhesiveness imparting agent | | Dynasylan AMMO | 3 | 3 | 3 |
| Dehydrating agent | | Dynasylan VTMO | 2 | 2 | 2 |
| Silanol condensation catalyst | | Neostann S-1 | 1.2 | 1.2 | 1.2 |
| ISO8340 test | Adhesion retention state at 100% elongation | | A | A | A |
| | Tensile physical property (average value of n=2) | TB (N/mm²) | 0.68 | 0.57 | 0.71 |
| | | EB (%) | 215 | 198 | 293 |
| | | Cohesive failure ratio (%) | A | 30 | 40 |
| ISO10590 test | Adhesion retention state at 100% elongation | | A | A | A |
| | Tensile physical property (average value of n=2) | TB (N/mm²) | 0.50 | 0.53 | 0.54 |
| | | EB (%) | 238 | 341 | 407 |
| | | Cohesive failure ratio (%) | 0 | 25 | 60 |

Table 3 also shows the result of Example 2 as a reference. From Table 3, Examples 2 through 4, in which the addition amount of the amine compound (C) was 15 parts by weight to 30 parts by weight, exhibited favorable adhesiveness and water-resistant adhesiveness to concrete.

## Claims

1. A primer composition, comprising:
a polyoxyalkylene-based polymer (A) having a hydrolyzable silyl group represented by general formula (1),
-SiR¹₃₋ₐXₐ (1)
where each R¹ independently represents a hydrocarbon group which has 1 to 10 carbon atoms and which may have a substituent constituted by a hetero atom-containing group or a halogen atom, each X independently represents a hydroxy group or a hydrolyzable group, and "a" represents 1 or 2;
a polyoxyalkylene-based polymer (B) that has a hydrolyzable silyl group represented by general formula (2), that has three or more terminal structures, and that has a number average molecular weight of 1,000 to 10,000,
-SiY₃ (2)
where each Y independently represents a hydroxy group or a hydrolyzable group; and
an amine compound (C) that has two hydrolyzable silyl groups,
an amount of the amine compound (C) being 12 parts by weight to 50 parts by weight, with respect to a combined total of 100 parts by weight of the polyoxyalkylene-based polymer (A) and the polyoxyalkylene-based polymer (B).

2. The primer composition as set forth in claim 1, wherein:
the polyoxyalkylene-based polymer (B) has a number average molecular weight of 1,000 to 6,000.

3. The primer composition as set forth in claim 1 or 2, wherein:
the amine compound (C) has one amino group.

4. The primer composition as set forth in claim 1 or 2, wherein:
a main chain structure of the polyoxyalkylene-based polymer (A) is a straight chain.

5. The primer composition as set forth in claim 1 or 2, wherein:
said primer composition is used in adhesion between concrete or mortar and a curable composition that contains a polyoxyalkylene-based polymer having a hydrolyzable silyl group.

6. A laminated body, comprising:
a base material layer (X) that is made of concrete or mortar;
a cured product layer (Y) that is obtained by curing a primer composition recited in claim 1 or 2; and
a cured product layer (Z) that is obtained by curing a curable composition which contains a polyoxyalkylene-based polymer having a hydrolyzable silyl group,
the base material layer (X) and the cured product layer (Y) making contact with each other, and the cured product layer (Y) and the cured product layer (Z) making contact with each other.
